# EUROPÄISCHE PATENTSCHRIFT

(11) **EP 0 444 392 B1**
(45) Veröffentlichungstag und Bekanntmachung des Hinweises auf die Patenterteilung: **24.02.1993**
(21) Anmeldenummer: 90890328.9
(22) Anmeldetag: 17.12.1990
(51) Int. Cl.: C05G 1/00, C05F 3/00, C05D 3/02

(54) **Verfahren zur Herstellung von Düngemitteln oder Bodenhilfsstoffen aus mineralischen oder organischen Komponenten**
Process for manufacturing fertilizers or soil amendments from mineral and organic components
Procédé de fabrication d'engrais ou d'agents d'amélioration du sol à partir de composants organiques et minéraux

(30) Priorität: 24.01.1990 AT 157/90
(43) Veröffentlichungstag der Anmeldung: 04.09.1991
(73) Patentinhaber: LOIDELSBACHER & PARTNER GESELLSCHAFT m.b.H., A-1040 Wien (AT)
(72) Erfinder: Loidelsbacher, Tamara, Dr., A-1040 Wien (AT)
(74) Vertreter: Köhler-Pavlik, Johann, Dipl.-Ing.

(56) Entgegenhaltungen:
- AT-A- 295 381
- US-A- 4 554 002
- DATABASE WPIL, Nr. 87-025118 [04], Derwent Publications Ltd, Londen, GB; & JP-A-61 281 093 (MITSUBISHI HEAVY IND. K.K.) 11-12-1986

## Beschreibung

Die Erfindung betrifft ein Verfahren zur Herstellung von Düngemitteln oder Bodenhilfsstoffen aus mineralischen und organischen Komponenten gemäß dem Oberbegriff des Patentanspruches 1.

Zur Zeit werden weltweit keine kompletten organisch-mineralischen Düngemittel oder Bodenhilfsstoffe aus rein natürlichen Rohstoffkomponenten oder organisch-mineralischen Abfällen aus Industrie und Haushalt hergestellt.

Die herkömmlichen Substanzen weisen überdies einige gravierende Nachteile auf. So muß etwa bei den organischen Düngemitteln, wie z.B. Stallmist oder Traubentrester, oftmals eine erhebliche Geruchsbelastung in Kauf genommen werden und die darin enthaltenen Nährstoffe sind zu leicht wasserlöslich, sodaß sie frühzeitig ausgewaschen werden können, noch bevor sie die Pflanze aufnehmen konnte.

Weiters weisen sie einen Mangel an Spurenelementen auf. Letztere sind in ausreichender Menge in den mineralischen Bodenhilfsstoffen enthalten, welche jedoch wiederum zu geringe Mengen der Hauptnährstoffe Stickstoff und Phosphor aufweisen. Schließlich ist die Wasserlöslichkeit der mineralischen Stoffe sehr gering, wodurch eine Kombination der beiden genannten Stoffgruppen durch den unausgewogenen Löseprozeß als nicht zielführend erschien, obwohl kombinierte organisch-mineralische Dünger bereits vorgeschlagen wurden, beispielsweise in der EP-A 085 939, der US-PS 4 559 073 oder der DE-A 3 128 673. In bekannter Weise wird das Ausgangsmaterial dabei zerkleinert, etwa mittels Schlagwerken oder verschiedener Mühlen. Hierbei erfolgt jedoch keine wesentliche Veränderung der physikalisch-chemischen Eigenschaften der Teilchen der Ausgangsstoffe.

Die Aufgabe der Erfindung war daher, ein Mittel zur Düngung und/oder Bodenverbesserung herzustellen, das sowohl mineralische als auch organischen Rohstoffkomponenten beinhaltet, das keine Geruchsbelastung darstellt, das allmählich abbaubar und leicht ausbringbar ist, sowie unter Verwertung von organischen und mineralischen Abfällen aus Industrie und Haushalten produzierbar ist.

Die Aufgabe wird erfindungsgemäß durch die in den Patentansprüchen gekennzeichneten Merkmale der Erfindung gelöst.

Durch die tribomechanische Aktivierung ergibt sich für diese Stoffe bessere Wasserlöslichkeit, erhöhte Austauschkapazität und eine wesentliche Vergrößerung der Reaktionsoberfläche. Bei der Vermischung mit den von vornherein besser wasserlöslichen organischen Substanzen kann durch die Aktivierung ein ausgewogener Lösungsprozeß beider Komponenten erreicht werden, sodaß im gleichen Zeitraum die mineralischen Spurenelemente und die organischen Nährstoffe in weitgehend konstantem Verhältnis abgegeben werden.

Der Vorteil des erfindungsgemäßen Herstellungsverfahrens liegt weiters in einer besseren Pelletierfähigkeit des Düngers aufgrund der Oberflächenaktivierung der einzelnen Teilchen. Pelletierter Dünger bedeutet aber einfachere Handhabung und Ausbringung. Substanzen, die eine solche Mahlfeinheit haben wie die Ausgangsgemische werden leicht verweht und die damit arbeitenden Menschen müssen Atemschutzmittel benützen.

Durch Granulierung und Pelletierung entstehen hingegen gut riesel- und streufähige Körner, die gut ausgestreut und nicht verweht werden können. Überdies wird dadurch eine langsamere Auflösung im Boden bewirkt. Man kann beispielsweise im Herbst streuen und die Wirkung entsteht erst nach der Aufwitterung nach dem Winter.

Weitere Merkmale und Vorteile der Erfindung sollen in der nachfolgenden Beschreibung und den Beispielen näher erläutert werden.

Als natürliche Rohstoffe für die Herstellung des erfindungsgemäßen Düngemittels eignen sich z.B.
- kompostierter oder getrockneter Geflügel- oder Stallmist,
- Trockenmizelle aus der Antibiotikumherstellung,
- Regenwurmhumus,
- tierische und/oder pflanzliche Rückstände,
- getrocknete Gülle oder Jauche,
- Traubentrester,oder
- eine beliebige Mischung der genannten Stoffe als organische Komponente und z.B.
- Kalzite,
- Magnesite,
- Dolomite,
- Zeolithe,
- Tuffite,
- Algenkalke oder
- eine beliebige Mischung der genannten Stoffe als mineralische Komponente.

Verwertbare Rohstoffe aus sekundären Quellen sind beispielsweise Holzasche von Fernheizwerken, Kompost aus Hausmüll, etc.

Die Aufbereitung der mineralischen Komponente erfolgt durch Vermahlen auf Korngrößen zwischen 0 und 1 mm, vorzugsweise auf Größen zwischen 0 und 0,06 mm. Die organische Komponente muß nicht vermahlen werden, kann aber, falls zur Aktivierung erforderlich, in gleicher Weise wie die mineralische Komponente behandelt werden. Die Vermahlung der organischen Komponente kann alternativ vor dem Vermischen mit der mineralischen Komponente erfolgen, oder beide Komponenten werden während oder nach dem Mischvorgang zusammen vermahlen. Die organische Komponente kann getrocknet oder ungetrocknet verarbeitet werden, wobei zur besseren Weiterverarbeitung der Düngemittelmischung während oder nach dem Mischvorgang allenfalls wieder Wasser beigemengt werden kann.

Beispielsweise erfolgt die Vermahlung in einer tribomechanischen Aktivierungsanlage, wie etwa in der AT-PS 295 381 beschrieben. Durch diese Vermahlungsart werden infolge der speziellen Behandlung der Teilchen deren Materialeigenschaften verbessert.

Der Aktivator besteht aus zwei gegenläufigen Rotoren mit insgesamt drei konzentrisch gebauten Kränzen, auf deren Rändern sich speziell gestellte Schlagschaufeln oder Stäbe aus hartem Metall befinden. Zwischen den Schlagschaufeln oder Stäben ist ein Raum für Ventilationsschaufeln vorgesehen, deren Aufgabe die Sicherung des Durchflusses von Material, das aktiviert wird, ist. Die Rotoren setzen sich mit einer Geschwindigkeit von bis zu 1500 Umdr./Minute jeweils in entgegengesetzter Richtung in Bewegung. Bei einem Durchmesser von etwa 900 mm entspricht dies einer Relativgeschwindigkeit der Schaufeln oder Stäbe gegeneinander von bis zu 120 m/sek. Bei derartig hohen Geschwindigkeiten wird das ins Korbinnere gelangende Material heftigen und häufigen Schlägen ausgesetzt, welche die Körner zerkleinern und aktivieren. Zusätzlich findet auch eine intensive Mischung des eingebrachten Materials statt. Der Innenkorb wird durch einen Motor mit etwa 1500 Umdr./Min. bewegt. In der Regel besitzt der Außenkorb für die Grob- und Feinmahlung zwei Rotationsstufen in der Größe von 1000 und 1500 Umdr./Min. Im Laufe der Materialbewegung durch den Aktivator entstehen Zusammenstöße zwischen den Ausgangskörnern, sowie Kollisionen des Materials mit Teilen des Aktivators, vor allem mit den Schlagschaufeln. Bei diesen Zusammenstößen wird die innere Energie ausgetauscht, denn die Zusammenstöße sind nicht elastisch.

Die Ausgangskörper werden in sehr kurzer Zeit, d.h. innerhalb längstens 0,5 sek, vorzugsweise längstens 0,01 sek, mindestens dreimal beschleunigt und abgestoppt, was bei dem dreidimensionalen Kristallgitter der Mineralstoffe, respektive bei den Zellmembranen der organischen Stoffe, Bruch, Raumunordnung, Deformation und Elektronenverlust (kaltes Plasma) hervorruft. So werden z.B. beim Kristallgitter mineralischer Stoffe verschiedene Defekte im Raumgitter (Punkt- und Lineardefekte) festgestellt. Bei diesen Defekten entsteht Dislozierung bzw. Unstabilität des Kristallgitters und gestörte Stabilität der Materialstruktur. Das aktivierte Material hat eine deutlich erhöhte spezifische Oberfläche, sowie eine mehrmals verstärkte thermodynamische Aktivität.

Durch tribomechanische Aktivierung entstehen bei den Rohstoffen folgende Veränderungen:
a) Zerkleinerung auf eine Korngröße von 0 - 1 mm, wobei der Anteil an Kolloiden grundsätzlich mehr als 20 % beträgt.
b) Rauhe Oberfläche des Materials, die durch tribomechanische Art der Zerkleinerung entsteht.
c) Bildung von Mineralionen und freien Radikalen -
   Entsteht infolge der Strukturveränderung des Materials.
   Die Anzahl der Defekte im Kristallgitter ist 10 bis 10.000 mal größer als bei anderen Vermahlungsarten und hier spricht man über die Aktivierung der Struktur.
d) Wasserlöslichkeit
   - Durch Bildung vieler Mineralionen und freier Radikale, sowie durch gestörte Gitter- und Elektronenstruktur werden nicht nur die Verbindungen an der Oberfläche der Kolloide wasserlöslich, sondern auch sämtliche enthaltene Verbindungen. Die Wasserlöslichkeit wird wesentlich verbessert.
e) Verfügbarkeit
   - Durch Einbau der kinetischen Energie und dadurch verursachte Elektronenbewegung erhalten die chemischen Verbindungen des aktivierten Materials die entsprechende Mineralionenform und infolge dessen werden sie für die Pflanzen verfügbar.
f) Ionenaustauscheffekt
   - Wird durch tribomechanische Aktivierung um das Mehrfache erhöht. Die von den Haarwurzeln der Pflanzen ausgestoßenen Wasserstoffionen werden wegen der unterschiedlichen statischen Ladung gegen verfügbare Laugenverbindungen ausgetauscht.

Die Wirkung im Boden ist bei tribomechanisch aktivierten Stoffen aufgrund folgender Effekte um das Mehrfache erhöht:
a) Einbringung von Kolloiden, die den Wasserhaushalt, die Feuchtigkeitsaufbewahrung, die Wasserauf- und -abgabe intensivieren, den Boden auflockern und die Krümelstruktur des Bodens allgemein verbessern.
b) Einbringung verfügbarer Nährstoffe in Mineralionenform, und damit qualitative Verbesserung des Nährstoffhaushaltes im Boden, besonders bei mangelnden und ausgelaugten Spurenelementenhaushalt.
c) Reaktivierung und Wiederverwertung im Boden fixierter in Übermenge vorhandener (Überdüngung) Pflanzennährstoffe, die von der Anwendung von chemischen Düngern, Gülle und Stallmist stammen.

Die organischen Rohstoffkomponenten werden mittels Erhitzen, Kompostierung oder Fermentierungsprozessen getrocknet und in Pulver-, Gries-,Körner- oder Stückchenform (bei Traubentrester Stückchen) zu den mineralischen Rohstoffkomponenten beigemengt, allenfalls nach gleichartiger Vermahlung.

Das Mischverhältnis zwischen mineralischen und organischen Rohstoffkomponenten beträgt 20 - 90 Gew.-%, vorzugsweise 60% der mineralischen und 10 - 80 Gew.-%, vorzugsweise 40% der organischen Rohstoffkomponenten.

Die Mischung wird vorzugsweise durch eine Schneckenpresse oder ähnliche Anlagen pelletiert oder mittels Heißlufttrommel granuliert. Das fertige Produkt ist riesel- und absackungsfähig.

Aus den nachfolgenden Anwendungsbeispielen ist zu ersehen, daß die Erträge bei tribomechanisch aktiviertem Dünger deutlich höher sind als bei herkömmlich hergestellten Dünge- oder Bodenverbesserungsmitteln. Die Pflanzen weisen überdies einen gleichmäßigeren und ungestörteren Wuchs auf als mit anderen Düngern gedüngte Pflanzen und sie erkranken auch seltener.

### Anwendungsbeispiele

1.) Herstellung von Düngergranulat aus Schweinegülle unter Beimengung von tribomechanisch aktivierten Kalziten.

Durch die Filterung von Gülle werden feste Stoffe auf mechanischem Wege ausgesondert, das restliche Wasser enthält jedoch eine sehr hohe Konzentration von aufgelösten Substanzen in entsprechender Ionenform, vorwiegend NH₄ und NO₃.

Die Beimengung von tribomechanisch aktivierten Kalziten bewirkt die elektrostatische Abbindung von Ionen auf die Oberfläche der Körnchen und somit wird die Masse im wesentlichen verbessert gefiltert.

Ein weiterer Vorteil dieser Beimengung ist die verbesserte Bindung der Trockensubstanz aus der Gülle mit dem tribomechanisch aktivierten Kalzit und dadurch erleichterte Granulierung des Produktes. Durch die Abbindung von Ionen und freien Radikalen wird auch die Geruchsentwicklung verhindert.

Bei dem Granulat selbst wird die Verfügbarkeit von Nährstoffen im Boden hinausgezögert und somit eine Langzeitwirkung hervorgerufen. Die gehemmte Verfügbarkeit ist auf die ionische Bindung zurückzuführen.

Die vergleichsweise angelegten Versuche mit nicht aktivierten, sondern gemahlenen Kalziten haben nur geringfügige Abbindungen hervorgerufen.

Im Raum Südost-Steiermark wurde auf schwerem, lehmigem Boden ein Versuch bei einer Sojabohnen-Kultur durchgeführt. Die Anbaufläche betrug 1,2 ha, die Vorfrucht war Mais, die Saatgutmenge an Sojabohnen betrug 220 kg.

Als Düngemittel auf der Versuchsfläche wurde eine Mischung aus 4.000 Liter Hühnergülle und 600 kg tribomechanisch aktivierter Mischung bestehend aus 400 kg Kalzite und 200 kg Zeolithe, ausgebracht. Die Ausbringung erfolgte vor dem Anbau. Die Aktivierung erfolgte bei den in der Beschreibung genannten Parametern. Die Ausgangsstoffe wurden innerhalb längstens 0,5 sec zumindest dreimal je einer Beschleunigung sowie einer Abstoppung unterworfen.

Es wurden insgesamt 3 Vergleichsflächen von 20 ar komparativ zu gleicher Zeit und unter gleichen Bedingungen mit jeweils unterschiedlichen Düngemitteln gedüngt. Eine Kontrollfläche ohne Düngung wurde ebenfalls angelegt.

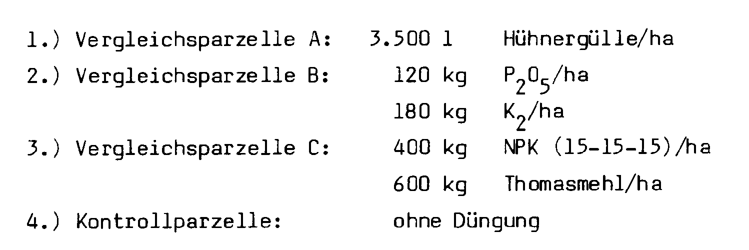

Während der Vegetation hat man bei der Versuchsparzelle einen gleichmäßigeren Wuchs als bei Vergleichsparzellen beobachtet. Einsatz von Herbiziden zwecks Unkrautvernichtung war bei der Versuchsparzelle unnötig, denn in ihrem Jugendstadium haben die Pflanzen ein hervorragendes Wachstum verzeichnet und somit die Entwicklung von Unkräutern verhindert.

Die Reifung der Bohnen war sehr gleichmäßig und erfolgte etwa 3 Wochen früher als bei den Vergleichsparzellen. Die Früchte der Vergleichsparzellen zeigten eine ungleichmäßige Ausreifung.

Die Ernteergebnisse waren auf den Vergleichsflächen unwesentlich höher als auf der Kontrollparzelle ohne Düngung.
- Vergleichsparzelle A:: 1.680 kg/ha
- Vergleichsparzelle B:: 1.665 kg/ha
- Vergleichsparzelle C:: 1.705 kg/ha
- Kontrollparzelle:: 1.628 kg/ha

Dementgegen war die Versuchsfläche mit der nach dem erfindungsgemäßen Verfahren hergestellten Mischung ertragsreicher und brachte 2.180 kg/ha.

2.) Anwendung einer Düngemittelkombination aus pelletiertem Hühnermist und tribomechanisch aktivierter Mineralstoffmischung, bestehend aus den Mineralien Zeolithe (20%), Kalzite (50%) und Dolomite (30%).

Die Mineralstoffmischung wurde entsprechend dem ersten Beispiel aktiviert und bei Tomaten, Erdbeeren und Gartenkresse angewendet.

Die Düngemittelkombination brachte bei allen drei Kulturen wesentlich besseres und kräftigeres Wachstum, sowie höheren Ertrag als bei den Vergleichsparzellen. Die Vergleichsparzellen wurden mit jeweils 12 kg NPK (15-15-15) pro ar behandelt. Die Ausbringung erfolgte am Beginn der Vegetation, Ende März.

Die Blattmasse bei Tomaten und Erdbeeren wurde bei den Versuchsparzellen (je 10 ar) wesentlich kräftiger und dunkelgrün verfärbt. Die Pflanzen setzten einen höheren Prozentsatz von Blüten und brachten einen deutlich höheren Ertrag, etwa um 30% höher als bei den Vergleichsparzellen. Ein weiteres Merkmal, welches sowohl bei Tomaten als auch bei Erdbeeren beobachtet wurde , war der viel bessere Geschmack der Früchte und ihre Lagerfähigkeit. Dies bezeugt, daß der Gehalt an Trockensubstanz höher war als bei konventionell gedüngten Pflanzen.

Die Verträglichkeitsprüfungen bei Gartenkresse zeigten keine negativen Auswirkungen beim Wachstum. Versuchsweise wurde das Substrat mit 10, 25 und 50% des Düngemittels vermischt. Bei allen Versuchen verzeichnete Gartenkresse in einer Zeitspanne von 4 Wochen gleichmäßigen ungestörten Wuchs. Dies weist darauf hin, daß Ammonium- und Nitrat-Ionen aus der Mischung nicht schnell verfügbar sind und die Pflanze kann keine "Überdosis" an Nährstoffen aufnehmen. Somit ist mit einer "Überdüngung" nicht zu rechnen.

Andernfalls, wenn man Gartenkresse mit unvermischten organischen Düngemitteln behandelt, beträgt die maximale Beimengung 5%. Eine höhere Beimengung zum Substrat ertragen die Pflanzen nicht, bzw. die übermäßige Nährstoffaufnahme führt zur gehemmten Entwicklung der Wurzeln im ersten Entwicklungsstadium, was ein weiteres Wachstum negativ beeinflußt.

Allmähliche Verfügbarkeit wirkt sich sehr positiv auf die Widerstandsfähigkeit gegenüber Pilzkrankheiten aus. Der Pflanzensaft enthält keine überflüssigen Ammonium-Ionen, welche die Lebensgrundlage für die Pilzkrankheiten darstellen und dadurch siedeln sich die Pilzkolonien nicht an, bzw. die Sporen haben keine Nährstoffbasis für ihre Entwicklung.

3.) Düngungsversuche bei Roggen mit der Mischung aus tribomechanisch aktivierten Kalziten und Schweinegülle.
- Versuchsparzellen:: 5 x 0,5 ha
- Gebiet:: Fichtelgebirge, Bayern
- Ausbringungszeit:: Ende November
- Mischverhältnis:: 600 kg tribomechanisch aktivierte Kalzite mit 18 m³ Schweinegülle/ha
- Ausbringung:: Flüssig mit Druckfaß
Vergleichsparzellen:
A:) 18 m³ Gülle/ha
B:) 18 m³ Gülle + 400 kg NPK 11-11-16/ha
C:) 18 m³ Gülle + 45o kg Nitrophoska/ha
D:) 800 kg Nitrophoska/ha
E:) Kontrollparzelle

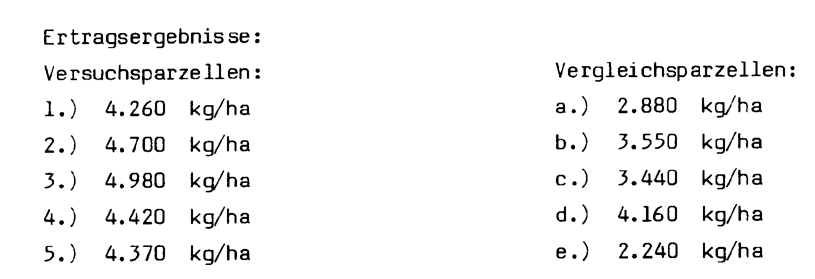

Aus den Ergebnissen ist ersichtlich, daß die versuchsweise ausgebrachten Düngemittelkombinationen deutlich höhere Erträge als die Vergleichsdüngung gebracht hat, insbesondere im Vergleich mit unbehandelter Gülle.

Dieser Ertragszuwachs ist auf die allmähliche Langzeitwirkung des gemischten Düngemittels zurückzuführen, welche infolge der elektrostatischen Abbindung von Ammonium- und Nitrat-Ionen entsteht.

## Patentansprüche

1. Verfahren zur Herstellung von Düngemitteln oder Bodenhilfsstoffen aus mineralischen und organischen Komponenten durch Mischen von zumindest einer mineralischen Komponente mit zumindest einer organischen Komponente, und anschließendes Pelletieren der Mischung, dadurch gekennzeichnet, daß zumindest die mineralische Komponente durch Vermahlen in einer tribomechanischen Aktivierungsanlage auf eine Korngröße zwischen 0 und 1 mm gebracht und aktiviert wird, wobei die Ausgangsstoffe innerhalb längstens 0,5 sec mindestens dreimal beschleunigt und abgestoppt werden.

2. Verfahren nach Anspruch 1, dadurch gekennzeichnet, daß die mineralische Komponente auf eine Korngröße zwischen 0 und 0,06 mm gebracht wird.

3. Verfahren nach Anspruch 1, dadurch gekennzeichnet, daß auch die organische Komponente, vorzugsweise ebenfalls in einer tribomechanischen Aktivierungsanlage, vermahlen wird.

4. Verfahren nach Anspruch 1, dadurch gekennzeichnet, daß die mineralische Komponente vor dem Vermischen mit der organischen Komponente vermahlen wird.

5. Verfahren nach Anspruch 3, dadurch gekennzeichnet, daß die organische Komponente vor dem Vermischen mit der mineralischen Komponente vermahlen wird.

6. Verfahren nach Anspruch 3, dadurch gekennzeichnet, daß die mineralische Komponente zusammen mit der organischen Komponente während oder nach dem Mischen vermahlen wird.

7. Verfahren nach Anspruch 1, dadurch gekennzeichnet, daß die mineralische Komponente Dolomit, Kalzit, Zeolith, Algenkalk oder eine Mischung davon ist.

8. Verfahren nach Anspruch 1, dadurch gekennzeichnet, daß die organische Komponente tierische oder pflanzliche Rückstände, Kompost, Traubenrester oder eine Mischung davon ist.

## Claims

1. A method of manufacturing fertilizers or soil enrichers from mineral and organic constituents by mixing at least one mineral constituent with at least one organic constituent and subsequently forming the mixture into pellets, characterized in that the mineral constituent at least is reduced to a grain size between 0 and 1 mm and activated by comminution in a tribomechanical activation plant, the starting materials being accelerated and stopped at least three times within at longest 0.5 seconds.

2. A method in accordance with Claim 1, characterized in that the mineral constituent is reduced to a grain size between 0 and 0.06 mm.

3. A method in accordance with Claim 1, characterized in that the organic constituent is comminuted too, preferably also in a tribomechanical activation plant.

4. A method in accordance with Claim 1, characterized in that the mineral constituent is comminuted before being mixed with the organic component.

5. A method in accordance with Claim 3, characterized in that the organic constituent is comminuted before being mixed with the mineral constituent.

6. A method in accordance with Claim 3, characterized in that the mineral constituent together with the organic constituent is comminuted during or after mixing.

7. A method in accordance with Claim 1, characterized in that the mineral constituent is dolomite, calcite, zeolite, algal lime or a mixture thereof.

8. A method in accordance with Claim 1, characterized in that the organic constituent is animal or vegetable residues, compost, grape rape or a mixture thereof.

## Revendications

1. Procédé pour la fabrication d'engrais ou d'agents d'amélioration du sol à partir de composants organiques et minéraux par le mélange d'au moins un composant minéral avec au moins un composant organique et par la mise en boulettes finale du mélange, caractérisé en ce qu'au moins le composant minéral est activé et introduit par broyage à une granulométrie de 0 à 1 mm dans une installation d'activation tribomécanique, les matières de base étant alors accélérées et stoppées au moins trois fois en 0,5 sec maximum.

2. Procédé selon la revendication 1, caractérisé en ce que le composant minéral est amené à une granulométrie comprise entre 0 et 0,06 mm.

3. Procédé selon la revendication 1, caractérisé en ce que le composant organique peut aussi être broyé de préférence dans une installation d'activation tribomécanique

4. Procédé selon la revendication 1, caractérisé en ce que le composant minéral est broyé avant d'être mélangé au composant organique.

5. Procédé selon la revendication 3, caractérisé en ce que le composant organique peut être broyé avant le mélange avec le composant minéral.

6. Procédé selon la revendication 3, caractérisé en ce que le composant minéral peut être broyé ensemble avec le composant organique pendant ou après le mélange.

7. Procédé selon la revendication 1, caractérisé en ce que le composant minéral est de la dolomite, de la calcite, de la zéolite, du calcaire d'algues ou un mélange de ceux-ci.

8. Procédé selon la revendication 1, caractérisé en ce que le composant organique est constitué par des restes végétaux ou animaux, du compost ou du marc de raisin, ou un mélange de ceux-ci.
